# EUROPEAN PATENT APPLICATION

(11) **EP 1 057 837 A1**
(43) Date of publication of application: **06.12.2000**
(21) Application number: 99201775.6
(22) Date of filing: 03.06.1999
(51) Int. Cl.: C08F 4/52, C08F 110/02

(54) **Process for the homopolymerisation of ethylene**

(71) Applicant: DSM N.V., 6411 TE Heerlen (NL)
(72) Inventor: Gruter, Gerardus Johannes Maria, 6215 JC Maastricht (NL); Wang, Bing, 6162 EP Geleen (NL)

(57) **Abstract**

Process for the homopolymerisation of ethylene at a reactor temperature between 250 and 500 K with a lanthanide catalyst, characterised in that a catalyst is used according to the formula

A₂Sm.xL (I),

wherein
A = a substituted or non-substituted cyclic π-bonded ligand,
L = a Lewis base and
x = 0 - 3,
and in that the catalyst concentration is between 1.10⁻⁹ mol/l and 5.10⁻⁴ mol/l.

## Description

The invention relates to a process for the homopolymerisation of ethylene at a temperature between 250 and 500 K with a lanthanide catalyst, to a polyethylene obtainable by this process and to fibres made from the polyethylene.

Lanthanide catalysts have been used for the homopolymerisation of ethylene as is for instance disclosed by EVANS W.J., The organometallic chemistry of the lanthanide elements in low oxidation states, Polyhedron 1987, 6, pages 803-831.

An advantage of the use of these catalysts for the polymerisation of ethylene is that they can be used as such and need not to be activated with a cocatalyst.

A disadvantage of the use of the lanthanide catalysts described by Evans is that homopolymers of ethylene with a molecular weight above 25,000 can not be produced at temperatures above 250 K.

The object of the invention is to overcome this disadvantage.

It has now, surprisingly been found that by performing the polymerisation with a catalyst according to the formula A₂Sm.xL (I), wherein
A = a substituted or non-substituted cyclic π-bonded ligand,
L = a Lewis base and
x = 0 - 3,
and with a catalyst concentration between 1.10⁻⁹ mol/l and 5.10⁻⁴ mol/l a homopolymer of ethylene can be produced with an Mw according to the following relation: ln(Mw) > 3450/T(K).

The ethylene homopolymers according to the invention have a higher Mw than the polymers according to the state of the art when produced at a certain temperature. With the process according to the invention homopolymers of ethylene with a molecular weight above 25,000 can now be produced at temperatures above 250 K. With the process according to the invention preferably homopolymers of ethylene with an Mw according to the relation: ln(Mw) > 3775/T(K) are produced.

The catalyst used for the homopolymerisation of ethylene has a structure according to the formula A₂Sm.xL (I), wherein
A = a substituted or non-substituted cyclic π-bonded ligand,
L = a Lewis base and
x = 0 - 3.
A is a substituted or non-substituted cyclic π-bonded ligand. Examples of A are cyclopentadienyl (Cp),
indenyl, tetrahydroindenyl and fluorenyl. A can be substituted with one or more substituents R. Preferably A is C₅R₅.

The substituents R can be the same or different and are, for instance, hydrogen or hydrocarbon substituents with 1-20 carbon atoms or substituted hydrocarbon substituents in which one or more hydrogen atoms have been substituted by halogen atoms, halogen substituents or organic silyl substituents. The substituents may also contain other elements from groups 14-17 of the Periodic System of the Elements. Examples of hydrocarbon substituents are alkyl, aryl and aralkyl substituents, such as for instance methyl, ethyl, propyl, isopropyl, butyl, hexyl, octyl, 2-ethylhexyl, decyl, phenyl, benzyl, dimethylaminoethyl or methoxyethyl. Examples of halogen substituents are fluorine, chlorine and bromine. Examples of organic silyl substituents are trimethylsilyl, triethylsilyl, phenyldimethylsilyl, diphenylmethylsilyl, triphenylsilyl and (dimethyl)(dimethylamino)silyl.

More preferably A is C₅R₅, wherein the substituents R can be the same or different and are alkyl groups containing 1-5 carbon atoms. More preferably R is methyl. Most preferably A is tetramethylcyclopentadienyl.

L is a Lewis base and is, for instance, an ether, a thioether, an amine or a phosphine. Examples of ethers are dimethylether, diethylether, dimethoxyethane, and tetrahydrofuran (THF). Examples of amines are trimethylamine, triethylamine and aniline. Examples of thioethers are diethylsulfide and thiofuran. Examples of phosphines are trimethylphosphine and triethylphosphine.

In the catalyst used according to the invention L is preferably THF.

The catalyst composition according to the invention can be used supported as well as non-supported. The supported catalysts are used mainly in gas phase and suspension polymerisation processes. The support used may be any support known as support material for catalysts, for instance SiO₂, Al₂O₃, MgCl₂ and polymeric support materials such as polystyrene, zeolites and clay. Combinations of support materials may also be used.

Polymerization of ethylene can be effected in a known manner, in the gas phase as well as in a liquid reaction medium. In the latter case, both solution and suspension polymerization are suitable, while the quantity of the catalyst to be used is such that its concentration in the dispersion agent amounts to 10⁻⁹ -5.10⁻⁴ mol/l, preferably 10⁻⁷ - 10⁻⁵ mol/l. The polymerisation can be performed as a batch or as a contiuous polymerisation.

Any liquid that is inert relative to the catalyst can be used as dispersion agent in the polymerization. One or more saturated, straight or branched aliphatic hydrocarbons, such as butanes, pentanes, hexanes, heptanes, pentamethyl heptane or mineral oil fractions such as light or regular petrol, naphtha, kerosine or gas oil are suitable for that purpose. Aromatic hydrocarbons, for instance benzene and toluene, can be used, but because of their cost as well as on account of safety considerations, it will be preferred not to use such solvents for production on a technical scale. In polymerization processes on a technical scale, it is preferred therefore to use as solvent the low-priced aliphatic hydrocarbons or mixtures thereof, as marketed by the petrochemical industry. If an aliphatic hydrocarbon is used as solvent, the solvent may yet contain minor quantities of aromatic hydrocarbon, for instance toluene.
The dispersion agent used may contain up to 5 vol% of polar solvents. Examples of such polar solvents are ethers and amines, such as THF and anisole. The presence of such a polar solvent gives rise to a polyethylene with a higher molecular weight (Mw). Drying or purification of solvents is desirable; this can be done without problems by the average person skilled in the art.

In addition to the catalyst the reaction mixture can also contain a small amount of an other organometallic compound that is used as a so called scavenger. The scavenger is added to react with impurities in the reaction mixture. Usually organoaluminum compounds are used as a scavenger.

Examples of scavengers are trioctylaluminium, triethylaluminium and triisobutylaluminium.

The polymerization is preferably carried out at a temperature between 320 and 480 K.

A solution polymerization is preferably carried out at temperatures between 400 and 500 K; in general, a suspension polymerization takes place at lower temperatures, preferably below 375 K.

The polyethylene resulting from the polymerization can be worked up by a method known per se. In general the catalyst is de-activated at some point during the processing of the polymer. The deactivation is also effected in a manner known per se, e.g. by means of water or an alcohol. Removal of the catalyst residues can mostly be omitted because the quantity of catalyst in the polymer is very low.

Polymerization is performed at a pressure between 0.5 and 500 MPa, continuously or discontinuously. Higher pressures, of 100 MPa and upwards, can be applied if the polymerization is carried out in so-called high-pressure reactors.

The polymerization can also be performed in several steps, in series as well as in parallel. If required, the catalyst composition, temperature, hydrogen concentration, pressure, residence time, etc. may be varied from step to step. In this way it is also possible to obtain products with a broad molecular weight distribution.

When the process according to the present invention is used the yield of the homopolymer of ethylene obtained is higher than 20 kg/gSm*hour*atm. More specific the yield is higher than 100 kg/gSm*hour*atm.

The invention is also directed to the production of polyethylene which has a low degree of chain entanglement due to crystallization of individual chains during polymer formation. Such a polyethylene is characterized by a differential scanning calorimetry (DSC) peak melting temperature of at least 140°C and a melting enthalpy of at least 200 J/g measured in a first heating curve at, for instance, a rate of 10°C/min provided that the polyethylene is not exposed to temperatures higher than 400 K during its formation and in the time period between its formation and the DSC measurement of the first heating curve. Materials made from this polyethylene are very homogeneous and durable.

The invention is also directed to the production of fibres with a polyethylene that is obtainable by the process according to the invention. The fibres can be produced by melt spinning, gel spinning and by spinning from a solid-state.

The invention will hereafter be elucidated by means of the following non-restrictive examples.

### Examples

All the operations were performed under nitrogen by using standard Schlenk techniques.
THF means tetrahydrofuran,
n-Bu means n-butyl,
Me means methyl,
Et means ethyl and
i-Pr means iso-propyl.

### Example I:

### Synthesis of SmI₂:

The dry Schlenk flask was filled with 180 ml THF and 3.06g Sm. At room temperature, 4.66g iodide was added slowly. After stirring 3 hours, the reaction temperature was raised and the reaction mixture was refluxed for 2 days to get a dark blue solution (at room temperature, the saturated THF solution of SmI₂ is 0.1M).

### Example II:

### Synthesis of n-BuMe₄C₅H:

4.98g 2,3,4,5-tetramethyl-2-cyclopentenone (36.03 mmol) was solved in 60 ml dry diethyl ether. 23.0 ml n-butyl lithium (1.6 M in hexane, 36.8 mmol) was slowly added to the solution which was cooled to - 78°C. After about 2 hours, the reaction temperature was raised to -30 °C and the reaction mixture was stirred another 2 hours. Then 2 ml water was added to the above reaction flask. A few minutes later, 7.12g p-toluenesulfonic acid monohydrate was added at -30 °C and the reaction mixture was stirred overnight. After purification, n-butyltetramethylcyclopentadiene, being a pale yellow oil (5.51g, 30.96mmol) was obtained (yield 85.9%).

### Example III:

### Synthesis of n-BuMe₄C₅K:

1.35g n-butyltetramethylcyclopentadiene (7.6 mmol) was added to a THF suspension of potassium hydride (0.5g, 12.5mmol). The reaction mixture was stirred overnight. A pale yellow solution was being formed. After the reaction mixture was washed by KPB, a white powder (1.24g) was obtained.

### Example IV:

### Synthesis of KC₅Me₅:

The preparation of KC₅Me₅ was performed as in example III starting with dry pentamethylcyclopentadiene. A white powder was obtained; 95.1% yield.

### Example V:

### Synthesis of EtMe₄C₅K:

2.82 g (about 20 mmol) 2,3,4,5-tetramethyl-2-cyclopentenone was solved in 60 ml dry ether. The solution was cooled to -60°C and 1.1 eq. of ethylmagnesiumbromide (22.5 ml, 1.0 M in THF) was slowly added to the cold solution. Thereafter the cooling bath was removed and the reaction mixture was stirred overnight. 1 Eq. of water was added to form the alcohol (EtMe₄C₅OH). This product was treated with 1 eq. p-toluenesulfonic acid. After purification (extraction with ether and evaporation) EtMe₄C₅H was obtained (yield 2.8 g, 93 % conversion).

In a dry Schlenk 18 mmol (-2.7 g) of the ligand was solved in THF (80 ml). To the solution 1.1 eq. of potassium was added. The solution was stirred for several days. A white suspension was being formed. The solid was separated from the solution and dried to get a white powder (0 .66 g/3.5 mmol).

### Example VI:

### Synthesis of Et₃C₅H₂K and Et₄C₅HK:

The preparation of Et₃C₅H₂K and Et₄C₅HK was performed as in example IV starting with dry Et₃C₅H₃ or dry Et₄C₅H₂. A white powder was obtained; 83% yield.

### Example VII:

### Synthesis of (i-Pr)₃C₅H₂K:

A double-walled reactor having a volume of 200 ml, provided with baffles, condenser, top stirrer, thermometer and dropping funnel was charged with 180 g (2.25 mol) of clear 50% strength NaOH, 9.5 g of Aliquat 336 (23 mmol) and 15 g (0.227 mol) of freshly cracked cyclopentadiene were added. The reaction mixture was stirred turbulently for a few minutes at a speed of 1385 rpm. Then 84 g of i-propyl bromide (0.68 mol) were added with simultaneous cooling with water. A few minutes after the addition of the i-propyl bromide the temperature rose by about 10°C. GC was used to show that about 30 minutes after all i-propyl bromide had been added, (monosubstituted) i-propylcyclopentadiene had formed. Then the mixture was heated to 50°C. After 2 hours the stirring was stopped and phase separation was awaited. The water layer was drawn off and 180 g (2.25 mol) of fresh 50% strength NaOH were added, followed by a further 1 hour's stirring at 50°C. GC was used to show that at that instant the mixture of di-, tri- and tetracyclopentadiene contained 90 to 95% of tri(i-propyl)cyclopentadiene. The product was distilled at 1.3 mbar and 77-78°C. After distillation, 31.9 g of tri(i-propyl)cyclopentadiene were obtained.

Tri(i-propyl)cyclopentadiene was added to a THF suspension of potassium hydride. The reaction mixture was stirred overnight. A pale yellow solution was being formed. After the reaction mixture was washed by KPB, a white powder was obtained.

### Example VIII:

### Synthesis of (Me₅C₅)₂Sm (THF)₂:

A dry Schlenk flask was charged with 0.88g (5.06mmol) potassium pentamethylcyclopentadienyl and 10ml THF. After stirring 30 minutes, 25ml THF solution of SmI₂ (0.1M, 2.5mmol) was added to the above suspension at room temperature. The colour of the suspension immidiately changed from dark blue to purple, and the reaction mixture was stirred overnight. The THF solvent was removed by vacuum to get a gray solid and 100ml toluene was added and stirred about 6 hours to get a purple solution and a white precipitate. The white solid was separated by filtration and a clear purple filtrate was obtained and the solvent was removed by vacuum to get a purple solid. In order to get a pure complex, 5ml THF was added into the flask and stirred a while, THF was removed again. 1.2g purple solid was produced (yield 78%).

### Example IX:

### Synthesis of (EtMe₄C₅)₂Sm(THF)₂:

The dry EtMe₄C₅K salt was charged with 15 ml SmI₂ solution (0.95 eq.) and stirred overnight. The catalyst was purified by removing the solution from the KI-salt. The THF was evaporated and de catalyst was washed with Toluene, stirred over night and filtered. The filtered sollution was evaporated and a 0.01 solution in KPB was made.

### Example X:

### Synthesis of (n-BuMe₄C₅)₂Sm(THF)₂:

The synthetic route is similar to the route described in example VI. SmI₂ (25ml, ∼0.1M) and potassium n-butyltetramethylcyclopentadienyl (1.24g, 5.7mmol), yield: 48.76%.

### Example XI:

### Synthesis of (Et₃C₅H₂)₂Sm(THF)₂:

The dry Et₃C₅H₂K salt was charged with 38 ml SmI solution (0.95 eq.) and stirred overnight. The catalyst was purified by removing the solution from the KI-salt. The THF was evaporated and the catalyst was washed with KPB. After that, the catalyst was dried and used to make a 0.01M catalyst solution.
The preparation of ***(Et***_{***4***}***C***_{***5***}***H)***_{***2***}***Sm(THF)***_{***2***} and ***((i-Pr)***_{***3***}***C***_{***5***}***H***_{***2***}***)***_{***2***}***Sm(THF)***_{***2***} was performed in the same manner starting from the K-salts of the respective ligands.

### Examples XII-XXIV:

The homopolymerization of ethylene was carried out in the following manner.

600 mL of an alkane mixture (pentamethylheptane or special boiling point solvent) was introduced as the reaction medium, under dry N₂, into a stainless steel reactor having a volume of 1.5 litres. The reactor was then, with stirring, heated to the desired temperature under a desired ethylene pressure.

When a scavenger is used, the desired quantity of scavenger was introduced into a catalyst proportioning vessel having a volume of 100 mL, containing 25 mL of the alkane mixture as a solvent.

Hereafter the scavenger was metered into the reactor.

In the same catalyst proportioning vessel 25 mL of the alkane mixture were metered in as a solvent. Hereto the desired quantity of catalyst was added, which was than metered into the reactor, whereupon the polymerization started. The polymerization reaction thus started was carried out isothermally. The ethylene pressure was kept constant at the set pressure. After the desired reaction time the ethylene supply was stopped and the reaction mixture was drawn off and quenched with methanol, after which the obtained polymer was admixed with an antioxidant (Irganox 1076, registered trademark) in order to stabilize the polymer. The polymer was dried in vacuo for 24 hours at 100°C.

The following conditions were varied:
- Sm-catalyst
- temperature
- catalyst concentration
- ethylene pressure.
The actual conditions are stated in Tables A and B. In the Examples XI-XVII as described in Table A the catalyst used was (C₅Me₅)₂Sm(THF)₂. The ethylene pressure was 2.10⁶ Pa, except for example XVII where the ethylene pressure was 1.10⁵ Pa. In the Examples XI-XVI trioctylaluminum was used as a scavenger. The molar ratio between the amount of catalyst and the amount of scavenger was 10.
In the Examples XVIII-XXIII as described in Table B the catalyst concentration was 1.5 10⁻⁵ mol/l, the polymerisation temperature was 423 K, the ethylene pressure was 2.10⁶ Pa and trioctylaluminum was used as a scavenger. The molar ratio between the amount of catalyst and the amount of scavenger was 10.

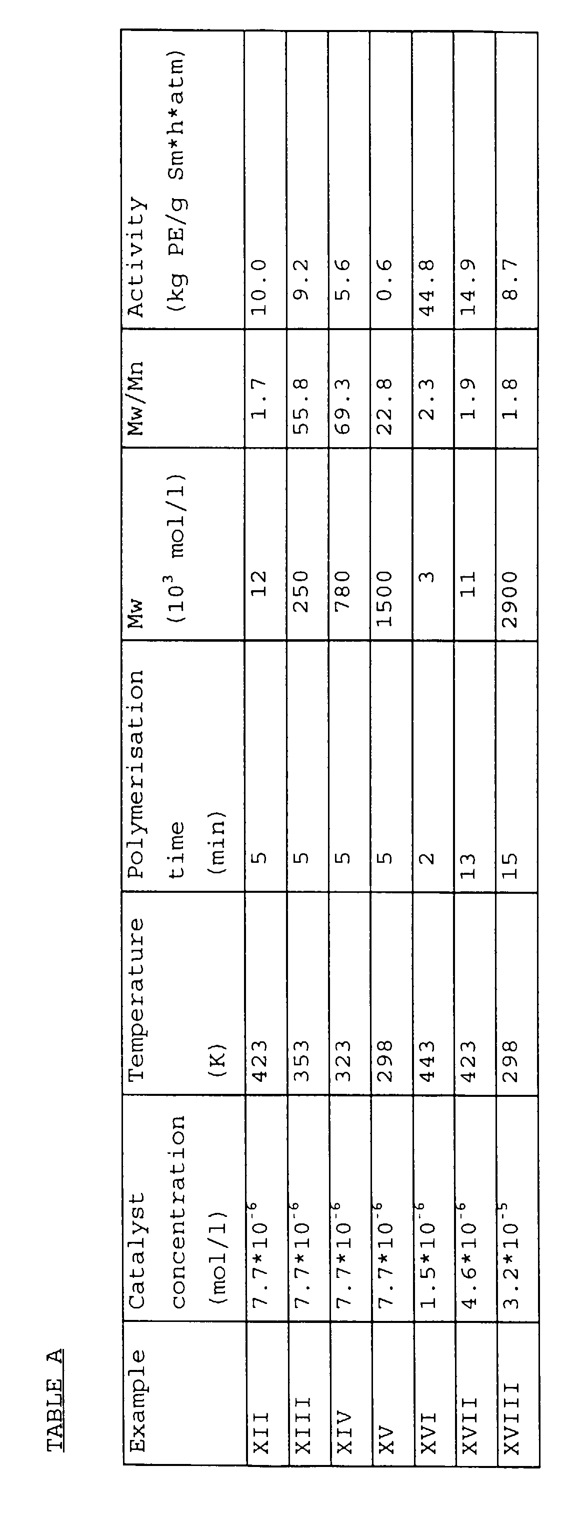

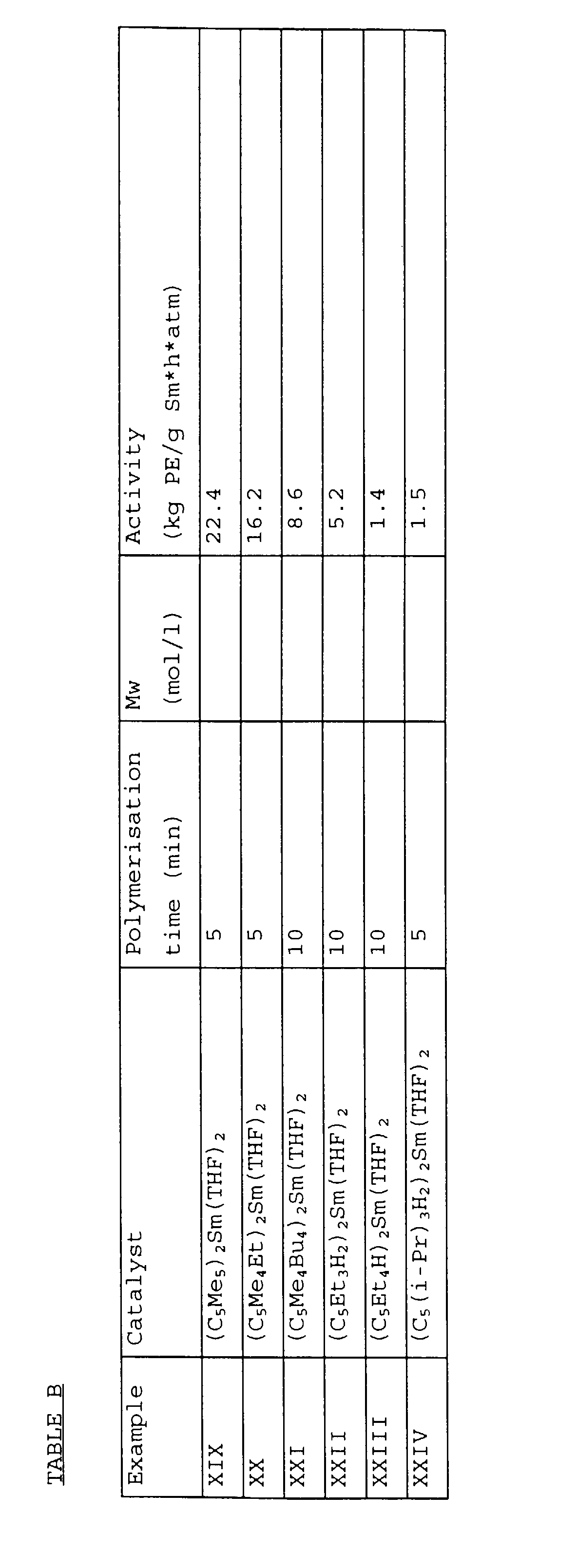

### Example XXV

7 liters of pentamethylheptane were introduced as the reaction medium, under dry nitrogen into a glass reactor having a volume of 10 liters. The reactor was then, with stirring, cooled to 0°C. After bubbling through ethylene for 1 hour, 5 times 2 mL of a 0.05 M solution of the catalyst of example VIII were added with time intervals of 5 minutes between each addition. 5 Minutes after the last catalyst addition a 5% HCl in methanol solution was added, the polyethylene product was filtered from the solution and was washed with ligroin and subsequently dried at 60°C under reduced pressure. The yield was 176 g of polyethylene with a Mw of 4,000,000, a Mn of 2,000,000 a DSC peak melting temperature of 143.5°C in a first heating curve measured at a rate of 10°C/min. The enthalpy difference measured during the same first heating curve was 226.3 J/g.

## Claims

1. Process for the homopolymerisation of ethylene at a reactor temperature between 250 and 500 K with a lanthanide catalyst, characterised in that a catalyst is used according to the formula
A2Sm.xL (I),
wherein
A = a substituted or non-substituted cyclic π-bonded ligand,
L = a Lewis base and
x = 0 - 3,
and in that the catalyst concentration is between 1.10⁻⁹ mol/l and 5.10⁻⁴ mol/l.

2. Process according to claim 1, characterised in that the catalyst concentration is between 10⁻⁷ - 10⁻⁵ mol/l.

3. Process according to any one of claims 1-2, characterised in that A is C₅R₅ wherein the substituents R can be the same or different and are alkyl groups containing 1-5 carbon atoms.

4. Process according to claim 3, characterised in that R is methyl.

5. Process according to any one of claims 1-4, characterised in that L is THF.

6. Process according to any one of claims 1-5, characterised in that the pressure during the homopolymerisation is between 0.5 and 500 MPa.

7. Process according to any one of claims 1-6, characterised in that the yield of the homopolymer of ethylene is higher than 20 kg/gSm*hour*atm.

8. Process according to any one of claims 1-6, characterised in that the yield of the homopolymer of ethylene is higher than 100 kg/gSm*hour*atm.

9. Process according to any one of claims 1-8, characterised in that the reactor temperature is between 320 and 480 K.

10. A polyethylene obtainable by a process according to any one of the claims 1-9, characterized by a differential scanning calorimetry (DSC) peak melting temperature of at least 140°C and a melting enthalpy of at least 200 J/g measured in a first heating curve provided that the polyethylene is not exposed to temperatures higher than 400 K during its formation and in the time period between its formation and the DSC measurement of the first heating curve.

11. Use of the polyethylene, obtainable by a process according to any one of claims 1-9, for the production of fibres.
